# EUROPÄISCHE PATENTSCHRIFT

(11) **EP 3 248 666 B1**
(45) Veröffentlichungstag und Bekanntmachung des Hinweises auf die Patenterteilung: **16.12.2020**
(21) Anmeldenummer: 17172459.4
(22) Anmeldetag: 23.05.2017
(51) Int. Cl.: B01D 46/00, B01D 46/24, B01D 46/30, B01D 46/38, B01D 46/48, B01D 50/00, B01D 53/12, B01J 8/00

(54) **VORRICHTUNG FÜR EINE SEPARATION VON PARTIKEL ENTHALTENDEN ABGASEN**
DEVICE FOR A SEPARATION OF PARTICLES-CONTAINING EXHAUST GASES
DISPOSITIF DE SÉPARATION DE GAZ D'ÉCHAPPEMENT CONTENANT DES PARTICULES

(30) Priorität: 26.05.2016 DE 102016209184; 22.03.2017 DE 102017204790
(43) Veröffentlichungstag der Anmeldung: 29.11.2017
(73) Patentinhaber: ULT AG, 02708 Löbau (DE)
(72) Erfinder: Jakschik, Stefan, 02625 Bautzen (DE); Schütz, Ronny, 02763 Zittau (DE); Reichmann, Andreas, 02763 Hirschfelde OT Wittgendorf (DE)
(74) Vertreter: Pfenning, Meinig & Partner mbB

(56) Entgegenhaltungen:
- EP-A1- 1 270 060
- WO-A1-03/084642
- DE-A1- 4 211 465
- DE-A1- 19 938 903
- DE-C1- 4 030 086
- JP-A- H11 253 734
- US-A- 3 989 488
- US-A- 4 973 458
- US-A- 5 198 002
- US-A1- 2006 236 855
- US-B1- 6 290 752

## Beschreibung

Die Erfindung betrifft eine Vorrichtung für eine Separation von Partikel enthaltenden Abgasen. Sie ist insbesondere geeignet, wenn chemisch reaktive Partikel im jeweiligen Rohgas enthalten sind. Die Vorrichtung kann man auch als Separationsvorrichtung bezeichnen, die insbesondere für die Separation von metallischen Partikeln, die in einem Rohgas enthalten sind, geeignet ist. Dies ist beispielsweise der Fall, wenn eine Bearbeitung von Titan oder Titanlegierungen erfolgt. So sind bei der generativen Herstellung von Bauteilen, wie dies beispielsweise das selektive Schmelzen pulverförmiger Werkstoffe mit einem Energiestrahl, insbesondere Laserstrahl, sind, in den dabei freigesetzten Dämpfen sowohl feste Partikel oder aus den Dämpfen durch Phasenwechsel wieder gebildete Partikel enthalten. Da die jeweilige Partikelgröße sehr klein sein kann, wirkt sich deren chemische Reaktivität besonders nachteilig aus und es kann zur Verbrennung, zu Verpuffungen und ggf. sogar zu kleinen Explosionen kommen, die jedoch zu vermeiden sind. Insbesondere wenn bei der Bearbeitung chemisch reaktive Komponenten frei gesetzt werden, kann in einer inerten Atmosphäre gearbeitet werden. Das eingesetzte Inertgas kann auch für die Separation durch die erfindungsgemäße Vorrichtung geführt werden. Es ist aber auch eine Separation unter normalen Atmosphärenbedingungen ohne Inertgas möglich.

Bei den generativen Herstellungsverfahren wird insbesondere bei der Verarbeitung chemisch reaktiver Werkstoffe in einer inerten Atmosphäre gearbeitet. Häufig ist dies Argon wegen der erhöhten Sicherheit und dem geringen Einfluss auf die zur Herstellung eingesetzten Werkstoffe. Wegen der hohen Kosten für das eingesetzte Argon ist eine Kreislaufführung sinnvoll.

Dabei gelingt es aber nicht vollständig sicher, die Argonatmosphäre zu jedem Zeitpunkt auch bei der Separation der im Rohgas enthaltenen Partikel einzuhalten, so dass kritische Situationen nicht immer vermieden werden können. Dies betrifft insbesondere Zeitpunkte bei denen Sammelbehälter für separierte Partikel aus einer Vorrichtung entfernt oder ausgetauscht werden sollen und dann keine inerten Verhältnisse eingehalten werden können, die eine Selbstendzündung oder anderweitige chemische Reaktion von Partikeln vermeiden.

Aus US 2006/0236855 A1 sind eine Vorrichtung und ein Verfahren zum Abscheiden von Staubbestandteilen aus einem explosionsfähigen Staub-LuftGemisch bekannt.

Es ist daher Aufgabe der Erfindung, Möglichkeiten für eine saubere, sichere und gefahrlose Separation von Partikeln aus einem Rohgas anzugeben.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung für eine Separation von Partikel enthaltenden Abgasen, wird in einer ersten erfindungsgemäßen Alternative ein Partikel enthaltendes Rohgas mittels eines Verdichters über eine rohrförmige Leitung deren mindestens eine Austrittsöffnung in einen geschlossenen Behälter, an den eine Filterkammer angeschlossen ist, geführt ist. Das Rohgas kann ein inertes Gas, insbesondere Argon oder ein Gemisch mit Luft sein.

Im Behälter ist ein inertes Material in Partikelform als lose Schüttung, eine inerte eine Flüssigkeit oder eine Suspension eines inerten Materials in Partikelform enthalten. Die Austrittsöffnung(en) der rohrförmigen Leitung oder mindestens eine Austrittsöffnung eines Tauchrohrs in das die Austrittsöffnung(en) der rohrförmigen Leitung mündet/münden, ist/sind innerhalb des inerten Materials, der inerten Flüssigkeit oder Suspension angeordnet.

Aus dem inerten Material, der inerten Flüssigkeit oder der Suspension austretendes Rohgas wird in die vertikal oberhalb des Behälters angeordnete Filterkammer, in der mindestens ein Filterelement angeordnet ist, geführt. Das durch das mindestens eine Filterelement austretende Reingas wird in die Umgebung ab- oder bei einer Bearbeitung im Kreislauf geführt.

Dadurch werden ein großer Teil von Partikeln von dem inerten Material, der inerten Flüssigkeit oder Suspension zurück gehalten und gelangen erst gar nicht bis zu einem Filterelement, bei dem das zu reinigende Rohgas durch ein Filtermedium strömt und anschließend als Reingas vorliegt. Außerdem kann die chemische Reaktivität von Partikeln vermindert werden.

In einer zweiten erfindungsgemäßen Alternative ist die Vorrichtung für metallische Partikel enthaltendes Rohgas so ausgebildet, dass das Rohgas einem Hohlraum zuführbar ist. Im Hohlraum ist/sind eine für die im Rohgas enthaltenen metallischen Partikel inerte Flüssigkeit und/oder inerte Partikel, deren Partikelgröße größer als die Partikelgröße der im Rohgas enthaltenen metallischen Partikel ist, enthalten.

In einer dritten Alternative, die allein oder zusätzlich zur zweiten Alternative angewendet werden kann, ist/sind eine inerte Flüssigkeit und/oder inerte Partikel mit dem Rohgas dem Hohlraum zuführbar.

Mit dem Rohgas in dem metallische Partikel enthalten sind, inerter Flüssigkeit und/oder inerten Partikeln wird im Hohlraum ein Wirbelbett ausgebildet. Ein Teil der im Rohgas enthaltenen metallischen Partikel mit dem Rohgas strömt in Richtung mindestens eines Filterelements mit dem eine Separation von metallischen Partikeln aus dem Rohgas, von inerter Flüssigkeit und/oder inerten Partikeln und eine Abführung von partikelfreiem Rohgas erreichbar ist.

Am mindestens einen Filterelement ist eine Einrichtung zur Abreinigung des Filterelements vorhanden.

Ein Teil von im Rohgas enthaltenen metallischen Partikeln mit inerter Flüssigkeit und/oder inerten Partikeln lagert sich an einem Boden eines Sammelbehälters ab. Dazu ist der Sammelbehälter vertikal unterhalb des mindestens einen Filterelements angeordnet ist.

Das metallische Partikel enthaltende Rohgas ist über eine Zuleitung in den Hohlraum einführbar. Die Zuleitung richtet den Rohgasstrom auf die Oberfläche eines mit inerter Flüssigkeit ausgebildeten Bades, die Oberfläche eines mit inerten Partikeln gebildeten Bettes oder die Oberfläche einer mit Flüssigkeit und inerten Partikeln gebildeten Suspension. Dadurch erfolgt ein erster Kontakt zwischen Rohgas, inerter Flüssigkeit und/oder inerten Partikeln ausschließlich im ausgebildeten Wirbelbett, in dem dann auch die Adhäsion der metallischen Partikel am jeweiligen inerten Material erreicht wird. An Tropfen oder inerten Partikeln anhaftende metallische Partikel werden gemeinsam mit dem jeweiligen inerten Material zum mindestens einen Filterelement und dem Sammelbehälter transportiert. Da entsprechende Volumenverhältnisse eingehalten werden können, kann eine lokale Verteilung metallischer Partikel im Gemisch erreicht werden, die das eigentliche vorhandene Gefahrenpotential der metallischen Partikel soweit reduzieren, dass keine spontanen chemischen Reaktionen zu erwarten sind. Dies trifft auch dann zu, wenn das Gemisch in dem die metallischen Partikel enthalten sind, einer zumindest Sauerstoff enthaltenden Atmosphäre ausgesetzt werden.

In der vorliegenden Erfindung ist innerhalb des Behälters in Strömungsrichtung vor der Verbindung zwischen Behälter und der Filterkammer ein Strömungsführungselement angeordnet, mit dem ein direktes Einströmen von aus dem inerten Material, der inerten Flüssigkeit oder Suspension austretenden Rohgas in die Filterkammer vermieden werden kann.

Der vertikal obere Bereich des Tauchrohrs als Strömungsführungselement, ist durch eine sich konisch in Richtung Filterkammer erweiternde Ausbildung des Tauchrohrs gebildet. Außerdem ist das aus dem inerten Material, der inerten Flüssigkeit oder Suspension austretende Rohgas durch einen Spalt, insbesondere einen Ringspalt zwischen dem vertikal oberen Rand des Strömungsführungselements und der Behälterwand in die Filterkammer geführt.

Mehrere Austrittsöffnungen an einer rohrförmigen Leitung oder einem Tauchrohr können über den Umfang verteilt, ggf. auch in mehreren übereinander angeordneten Reihen angeordnet, vorhanden sein. Die Austrittsöffnungen können auch unterschiedliche freie Querschnittsflächen aufweisen, so dass Rohgas mit unterschiedlichen Strömungsgeschwindigkeiten, -richtungen und Strahlquerschnittsformen austreten kann, was eine Beeinflussung der Strömung des Rohgases innerhalb des inerten Materials, der inerten Flüssigkeit oder Suspension ermöglicht. So kann beispielsweise Einfluss auf die Ausbildung eines Wirbelbettes mit partikleförmigem inerten Material genommen werden. Erfindungsgemäß soll Rohgas mit einem Druck und Volumenstrom in den Behälter eingeführt werden und aus der/den Austrittsöffnung(en) der Leitung oder der/den Austrittsöffnung(en) des Tauchrohrs austreten, dass damit eine Wirbelschichtausbildung des inerten Materials erreichbar ist.

Aus Sicherheitsgründen kann es vorteilhaft sein, dass zwischen Behälter und Filterkammer ein Absperrelement angeordnet ist, mit dem temporär ein Einströmen von Rohgas aus dem Behälter in die Filterkammer vermieden werden kann.

Ein inertes Material kann ausgewählt aus Mineralmehlen, insbesondere Quarzsand und Salzen und eine Flüssigkeit kann ausgewählt aus Wasser, Glycerin und Alkanolen, insbesondere 1.2-Propandiol sein.

Eine Suspension, die mit einem der erwähnten inerten Materialien und einer Flüssigkeit, im einfachsten Fall Wasser oder einer der genannten Flüssigkeiten gebildet ist, kann im Behälter vorhanden sein, um Rohgas hindurch strömen zu lassen.

Vorteilhaft kann eine an sich bekannte Druckstoßeinrichtung zur Abreinigung des mindestens einen Filterelements vorhanden sein und dabei ein Bereich der Filterkammer sich konisch in Richtung Behälter ausgebildet sein. Der sich in Richtung Behälter offene Verbindungsbereich kann so in den Behälter münden.

Der Behälter oder der Teil des Behälters, in dem inertes Material, inerte Flüssigkeit oder Suspension enthalten ist/sind, sollte lösbar mit der Filterkammer verbunden sein. Während der Nutzung sollten Behälter und Filterkammer so miteinander verbunden sein, das ein Austritt von Gas aus der Vorrichtung und ein Eintritt von Gas aus der Umgebung in die Vorrichtung vermieden werden kann.

Im Behälter sollte ein Füllstand an inertem Material, inerter Flüssigkeit oder Suspension eingehalten sein, mit dem gesichert werden kann, dass aus der mindestens einen Austrittsöffnung einer rohrförmigen Leitung oder eines Tauchrohrs austretendes Rohgas zu jedem Zeitpunkt inertes Material, inerte Flüssigkeit oder Suspension durchströmen muss, bevor es in die Filterkammer strömt.

Insbesondere bei der zweiten und/oder dritten erfindungsgemäßen Alternative sollte der Hohlraum, in dem sich das Wirbelbett ausbildet, vertikal oberhalb des Sammelbehälters und unterhalb des mindestens einen Filterelements angeordnet sein. Bei einer solchen Ausführungsform kann der Hohlraum in einem Gehäuse aufgenommen oder darin angeordnet sein, in dem auch die anderen Komponenten, wie Sammelbehälter und Filterelement angeordnet sind.

Der Hohlraum kann aber auch neben einem Gehäuse in dem das mindestens eine Filterelement und der Sammelbehälter angeordnet sind, angeordnet und über eine Verbindungsleitung mit dem Gehäuse verbunden sein, wobei über die Verbindungsleitung metallische Partikel enthaltendes Rohgas mit inerter Flüssigkeit und/oder inerten Partikeln aus dem Wirbelbett zum mindestens einen Filterelement und dem Sammelbehälter aus dem im Hohlraum gebildeten Wirbelbett gelangen. Ein so angeordneter und verbundener Hohlraum kann quasi eine Vorkammer bilden, in der eine Adhäsion metallischer Partikel mit inerter Flüssigkeit und/oder inerten Partikeln an Oberflächen von Tropfen oder inerten Partikeln im Wirbelbett erreicht werden kann.

Die Strömungsverhältnisse zwischen dem Hohlraum dem mindestens einen Filterelement und dem Sammelbehälter können so gewählt werden, dass zumindest ein Teil des Gemisches, das mit metallischen Partikeln sowie inerter Flüssigkeit und/oder inerten Partikel gebildet ist, bis zum mindestens einen Filterelement gelangt und bei einer Abreinigung der damit gebildete Filterkuchen vom Filterelement in den Sammelbehälter herab fällt. Eine Abreinigung kann in vorgebbaren Zeitabständen oder in geregelter Form initiiert werden. Im letztgenannten Fall kann eine Abreinigung ausgelöst werden, wenn der Druckanstieg am Filterelement einen vorgebbaren Schwellwert überschritten hat.

Vorteilhaft sollte eine Abreinigung mittels Druckstoß erfolgen, wie dies in der Filtertechnik an sich bekannt ist.

Mehrere Filterelemente sollten zeitversetzt zueinander abgereinigt werden. Dadurch kann ein kontinuierlicher Betrieb gesichert werden.

Das im Hohlraum ausgebildete Wirbelbett sollte mit mindestens 50 Vol.-% der vorhandenen inerten Flüssigkeit und/oder inerten Partikeln gebildet sein.

Dem Rohgas kann zumindest ein Teil der eingesetzten inerten Flüssigkeit und/oder inerten Partikel über mindestens einen Injektor zugeführt werden. Der Injektor kann in der Zuleitung für das Rohgas, das aus einer Herstellungsanlage abgeführt wird, zum Hohlraum angeordnet sein. Mit zugeführter inerter Flüssigkeit und/oder inerten Partikeln kann auch ein Verlust ausgeglichen werden, so dass das erforderliche Volumen für eine ausreichende Wirbelbettausbildung eingehalten werden kann. Dabei kann eine Regelung des Volumenstroms an flüssigem und/oder festem inerten Material, der dem Rohgas zugeführt wird, hilfreich sein.

Der Sammelbehälter kann austauschbar am Gehäuse befestigt sein, so dass bei Erreichen eins vorgebbaren maximalen Füllstand ein Wechsel gegen einen leeren Sammelbehälter möglich ist.

Es besteht aber auch die Möglichkeit, dass am Sammelbehälter eine Entnahmeeinrichtung für ein Gemisch bestehend aus aus dem Rohgas separierten metallischen Partikeln, inerter Flüssigkeit und/oder inerten Partikeln vorhanden ist. Die Entnahmeeinrichtung sollte bevorzugt für eine dosierte Entnahme ausgebildet sein. Dadurch können für eine nachfolgende Entsorgung oder eine Nachbehandlung geeignete Portionen zur Verfügung gestellt werden. An der Entnahmeeinrichtung kann eine Schleuse vorhanden sein, mit der ein unerwünschter Austritt von inertem Gas, das Bestandteil des abgesaugten Rohgases ist, vermieden werden kann.

Eine dosierte Entnahme eines mit aus dem Rohgas separierten metallischen Partikeln, inerter Flüssigkeit und/oder inerten Partikeln gebildeten Gemisches kann in vorgebbaren Zeitintervallen oder jeweils nach einer vorgebbaren Anzahl an Abreinigungen des/der Filterelemente(s) erfolgen.

Für die Absaugung des Rohgases, die Ausbildung des Wirbelbettes und die Führung des Gasstromes durch das mindestens eine Filterelement ist ein Unterdruckerzeuger vorhanden, mit dem ein ausreichender Volumenstrom an Rohgas aus einer Anlage zur generativen Herstelllung von dreidimensionalen Bauteilen abgesaugt werden kann.

Es sollte ein Verhältnis von mindestens 50 Masse-% inerter Partikel in Bezug zu maximal 50 Masse-% an metallischen Partikeln, die im Rohgas enthalten sind, und/oder ein Verhältnis von mindestens 30 Vol.-% inerter Flüssigkeit in Bezug zu maximal 70 Vol.-% an metallischen Partikeln, die im Rohgas enthalten sind, eingehalten sein.

Dabei kann eine Nachführung von inerter Flüssigkeit und/oder inerten Partikeln erfolgen, wenn ein Austausch eines gefüllten Sammelbehälters oder eine dosierte Entnahme aus dem Sammelbehälter erfolgt ist. Wie bereits zum Ausdruck gebracht kann aber auch eine kontinuierliche Nachführung, insbesondere über einen Injektor erfolgen.

Als inerte Flüssigkeit kann man flüssige insbesondere langkettige Kohlenwasserstoffverbindungen (Flüssigkeit, z.B. Glycol) einsetzen und inerte Partikel können Gesteinsmehle, z.B. Gesteinsmehl von Perlit eingesetzt werden.

Eine Suspension mit der eine Separation der im Rohgas enthaltenen metallischen Partikel erfolgen kann, kann vorteilhaft mit einer inerten Flüssigkeit und inerten Partikeln zur Separation eingesetzt werden. Zusätzlich kann mindestens ein Tensid, mit dem die Oberflächenspannungsverhältnisse vorteilhaft beeinflusst werden können, in der Suspension enthalten sein.

Nachfolgend soll die Erfindung beispielhaft näher erläutert werden.

Dabei zeigen:
Figur 1 eine schematische Schnittdarstellung eines Beispiels einer erfindungsgemäßen Vorrichtung und
Figur 2 in schematischer Form ein weiteres Beispiel einer erfindungsgemäßen Vorrichtung.

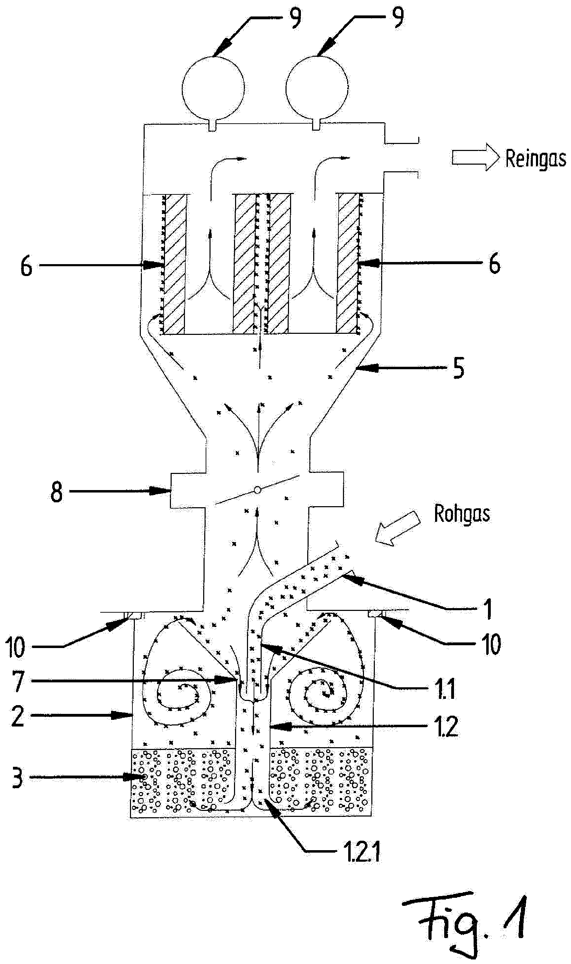

Bei dem in Figur 1 gezeigten Beispiel wird Partikel enthaltendes Rohgas durch die rohrförmige Leitung 1 in einen Behälter 2 geführt. Der Behälter 2 ist im Ruhezustand, d.h. ohne einströmendes Rohgas zu 30% mit Quarzsand mit einer mittleren Partikelgröße d₅₀ von 1,5 mm, als inertes partikelförmiges Material 3 gefüllt.

Bei diesem Beispiel ist die Austrittsöffnung 1.1 der rohrförmigen Leitung 1 im Inneren eines Tauchrohres 1.2 angeordnet, so dass das aus der Austrittsöffnung 1.1 der rohrförmigen Leitung austretende Rohgas durch das Tauchrohr 1.2 in Richtung Boden des Behälters 2 strömt und durch die Austrittsöffnung 1.2.1 des Tauchrohres 1.2 ausströmt und durch das als lose Schüttung vorliegende inerte Material 3 hindurch strömt. Die Austrittsöffnung 1.2.1 des Tauchrohres 1.2 ist bei diesem Beispiel in einem Abstand von einigen Millimetern zum Boden des Behälters 2 angeordnet. Es kann auch mindestens eine Austrittsöffnung in nichtdargestellter Form durch die Mantelfläche des Tauchrohres 1.2 in Form einer Durchbrechung vorhanden sein. Ein oder mehrere solcher Austrittsöffnung(en) 1.2.1 bildende Durchbrechungen können über den Umfang verteilt in einer oder mehreren übereinander angeordneten Reihe(n) angeordnet sein. Durchbrechungen können unterschiedlich große und unterschiedlich geometrisch gestaltete freie Querschnitte aufweisen.

Die Austrittsöffnung(en) 1.2.1 sollten jedoch innerhalb eines Bettes, das mit als lose Schüttung im Behälter 2 vorhandenen partikelförmigem Material 3 gebildet ist, einer inerten Flüssigkeit oder Suspension angeordnet sein.

In nichtdargestellter Form kann in einer einfachen Ausführungsform einer erfindungsgemäßen Vorrichtung auch auf das Tauchrohr 1.2 verzichtet werden und das Rohgas unmittelbar aus der mindestens einen Austrittsöffnung 1.1 der rohrförmigen Leitung 1 in das inerte Material 3, die inerte Flüssigkeit oder eine Suspension einströmen.

Bei dem Beispiel wird das mit einem nicht dargestellten Verdichter angesaugte Rohgas mit einem Druck und Volumenstrom in die lose Schüttung des inerten Materials 3 eingeführt, dass mit Partikeln oberhalb der losen Schüttung innerhalb des Behälters 2 eine Wirbelschicht ausgebildet wird, aus der grob gereinigtes und von zumindest einem Teil der vorab enthaltenen Partikel befreites Rohgas in eine Filterkammer 5 strömt. In der Filterkammer 5 sind bei diesem Beispiel zwei Filterelemente 6 vorhanden, durch die das vorgereinigte Rohgas strömt und die Vorrichtung als Reingas verlassen kann.

Zur Vermeidung des Eindringens von Partikeln, die vorab bereits separiert worden sind, Partikel des inerten Materials 3, inerter Flüssigkeit oder Bestandteilen einer Suspension weist das Tauchrohr 1.2 in seinem vertikal oberen Bereich, der in Richtung Filterkammer 5 weist eine sich in diese Richtung konische Erweiterung auf, mit der ein Strömungsführungselement 7 für Rohgas, das aus dem Behälter 2 in die Filterkammer 5 strömt, gebildet ist.

Das aus dem inerten Material 3, inerter Flüssigkeit oder Suspension austretende vorgereinigte Rohgas strömt so nicht direkt in die Filterkammer 5. Sie gelangt durch einen Ringspalt, der zwischen dem vertikal nach oben weisenden Stirnfläche des Tauchrohres 1.2 und dem Deckel des Behälters 2 angeordnet ist, aus dem Behälter 2 in die Filterkammer 5. Die konische Aufweitung des Strömungsführungselements 7 sollte so groß sein, dass sie mindestens so groß ist, wie der freie Querschnitt der Eintrittsöffnung für vorsepariertes Rohgas in die Filterkammer 5.

In einem Bereich der Filterkammer 5, der hier als Hohlzylinder ausgebildet ist, ist ein Absperrelement 8 installiert, mit dem eine gasdichte Trennung zwischen Behälter 2 und Filterkammer 5 erreichbar ist, wenn dies beispielsweise aus Sicherheitsgründen erforderlich ist.

An den als Hohlzylinder ausgebildeten Bereich der Filterkammer 5 schließt sich ein konisch in Richtung Filterelemente 6 erweiternder Bereich an. Dieser Bereich wirkt sich vorteilhaft in Verbindung mit einer an sich bekannten Druckstoßeinrichtung 9 aus, mit der eine Abreinigung der Filterelemente 6 erreicht werden kann. Dabei können von den Filterelementen 6 herabfallende Partikel sicher in den Behälter 2 herabfallen.

Bei dem gezeigten Beispiel ist der Deckel des Behälters 2 Bestandteil der Filterkammer 5 und der vertikal oben offene Behälter 2 kann mit diesem Teil der Filterkammer 5 verbunden werden. Zur Abdichtung ist mindestens ein radial umlaufendes Dichtelemente 10 vorhanden. Der Behälter 2 ist lösbar mit der Filterkammer 5 verbunden, was mit geeigneten Verbindungselementen, wie z.B. Schrauben, Klemmen, Federn o.a.m. erreicht werden kann.

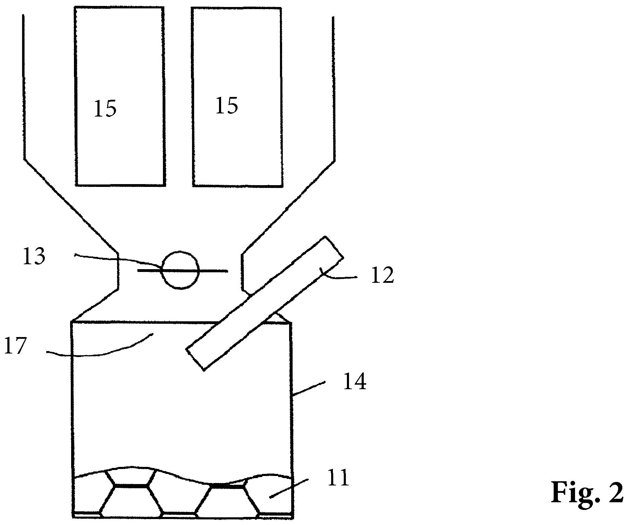

Bei dem in Figur 2 gezeigten Beispiel wird metallische Partikel enthaltendes Rohgas über eine Zuleitung 12 aus einer nicht gezeigten Anlage, die zur Herstellung dreidimensionaler Bauteile durch selektives Laserstrahlsintern oderschmelzen ausgebildet ist, in einen Sammelbehälter 14 mit einem ausreichenden Druck und Volumenstrom einführbar ist, mit dem im Sammelbehälter 14 enthaltene inerte Partikel so verwirbelt werden können, dass sich oberhalb des mit den inerten Partikeln am Boden des Sammelbehälters gebildeten Bettes 11 in einem darüber angeordneten Hohlraum 17 ein Wirbelbett ausgebildet, in dem die im Rohgas enthaltenen metallischen mit den inerten Partikeln in Kontakt gebracht werden. An Oberflächen der inerten Partikel lagern sich metallische Partikel infolge Adsorption und/oder van der Waalsche Kräfte an.

Zumindest ein Teil der gesamten Partikelmenge kann durch Unterdruckwirkung an die Oberfläche der bei diesem Beispiel zwei Filterelemente 15 gelangen. Dort erfolgt eine Separation der festen Partikel vom Rohgas, das abgezogen oder im Kreislauf durch die Anlage und die Separationsvorrichtung geführt werden kann.

Nach einer Abreinigung von zumindest eines der Filterelemente 15, die mittels Druckstoßwirkung erreicht werden kann, fallen Partikel des Partikelgemischs zurück in die Sammelkammer 14, die vertikal unterhalb der Filterelemente 15 angeordnet ist. Zumindest ein Teil der herabfallenden Partikel gelangt in das am Boden des Sammelbehälters 14 ausgebildeten Bettes 11.

Ein weiterer Teil kann durch die Wirkung der Rohgasströmung im Wirbelbett gehalten und erneut für ein Anhaften weiterer metallischer Partikel, die mit Rohgas über die Zuleitung 12 aus der Anlage in die Separationsvorrichtung eingeführt werden, werden.

Anstelle inerter Partikel kann aber auch eine inerte Flüssigkeit oder Suspension im Sammelbehälter 14 für die Separation analog zu den inerten Partikeln genutzt werden. Die Flüssigkeit oder Suspension bildet am Boden des Sammelbehälters ein Bad. Das Wirbelbett wird mit Tropfen, die aus dem Bad durch den Rohgasstrom herausgeblasen werden, gebildet. An oder bei einer Suspension auch in den Tropfen können sich metallische Partikel, die im Rohgasstrom enthalten waren anlagern und aus dem Rohgasstrom separiert werden.

Reine inerte Partikel, inerte Flüssigkeit oder inerte Suspension können als Vorlage in einem Sammelbehälter 14 in die Separationsvorrichtung eingesetzt werden. Dies kann in regelmäßigen Abständen oder auch nach einer vorgebbaren Anzahl von Abreinigungen an den Filterelementen 15 erreicht werden. Die Abreinigung der beiden Filterelemente 15 sollte sequentiell, also zeitversetzt zueinander durchgeführt werden.

Für Notfälle bzw. bei erreichen eines vorgebbaren Volumens an Partikeln, einem Flüssigkeits-Partikel-Gemisch oder einer mit metallischen Partikeln beladenen Suspension kann ein Abschalten der Separationsvorrichtung und/oder der Anlage zur generativen Herstellung von Bauteilen mittels selektivem Lasersintern oder -schmelzen eingeleitet und der Sammelbehälter gegen einen anderen Sammelbehälter, der mit einer Vorlage eines mit inerten Partikeln gebildeten Betts oder einem Bad einer inerten Flüssigkeit oder Suspension befüllt worden ist, ausgetauscht werden.

Bei der Separationsvorrichtung kann auch ein Verschlusselement 13 zwischen Sammelbehälter 14 und Filterelementen 15 angeordnet sein, mit dem ein Anströmen von Partikel und/oder Tropfen enthaltender Rohgasstrom an mindestens ein Filterelement 15 beeinflusst werden kann. Das Verschlusselement 13 kann den Rohgasstrom in Richtung des/der Filterelemente(s) 15 vollständig oder teilweise sperren. Ein Verschlusselement 13 kann aber auch wie eine Drosselklappe ausgebildet sein und dementsprechend wirken. Wird ein wie eine Drosselklappe ausgebildetes Verschlusselement 13 um eine Rotationsachse in bestimmte Winkelstellungen bewegt, kann die Strömungsgeschwindigkeit und dementsprechend auch das ausgebildete Wirbelbett beeinflusst werden.

Der Hohlraum 17 kann dabei zwischen Verschlusselement 13 und Sammelbehälter 14 oder innerhalb des Sammelbehälters 14 angeordnet sein.

In nicht dargestellter Form können inerte Partikel, inerte Flüssigkeit und/oder eine inerte Suspension auch über einen an der Zuleitung 12 angebrachten Injektor mit dem metallische Partikel enthaltenden Rohgas in den Sammelbehälter 17 zur Ausbildung des Wirbelbetts zugeführt werden.

## Patentansprüche

1. Vorrichtung für eine Separation von Partikel enthaltenden Abgasen, bei der ein Partikel enthaltendes Rohgas mittels eines Verdichters über eine rohrförmige Leitung (1) deren mindestens einen Austrittsöffnung (1.1) in einen geschlossenen Behälter (2), an den eine Filterkammer (5) angeschlossen ist, geführt ist, wobei
im Behälter (2) ein inertes Material (3) in Partikelform als lose Schüttung, eine inerte Flüssigkeit oder eine Suspension eines inerten Materials in Partikelform enthalten und die Austrittsöffnung(en) (1.1) oder mindestens eine Austrittsöffnung (1.2.1) eines Tauchrohrs (1.2) in das die Austrittsöffnung(en) der rohrförmigen Leitung (1) mündet/münden innerhalb des inerten Materials, der inerten Flüssigkeit oder der Suspension angeordnet ist/sind, und mit Rohgas in dem metallische Partikel enthalten sind, inerter Flüssigkeit und/oder inerten Partikeln im Behälter (2) ein Wirbelbett ausgebildet wird und aus dem inerten Material (3), der inerten Flüssigkeit oder der Suspension austretendes Rohgas in die vertikal oberhalb des Behälters (2) angeordnete Filterkammer (5), in der mindestens ein Filterelement (6) angeordnet ist, geführt ist, und das durch das mindestens eine Filterelement (6) austretende Reingas in die Umgebung abgeführt oder bei einer Bearbeitung im Kreislauf geführt wird, wobei
innerhalb des Behälters (2) in Strömungsrichtung vor der Verbindung zwischen Behälter (2) und der Filterkammer (5) ein Strömungsführungselement (7) angeordnet ist, mit dem ein direktes Einströmen von aus dem inerten Material (3), der inerten Flüssigkeit oder Suspension austretenden Rohgas in die Filterkammer (5) vermeidbar ist, **dadurch gekennzeichnet dass** der vertikal obere Bereich des Tauchrohrs (1.2) als Strömungsführungselement (7), durch eine sich konisch in Richtung Filterkammer (5) erweiternde Ausbildung des Tauchrohrs (1.2) gebildet und das aus dem inerten Material (3), der inerten Flüssigkeit oder Suspension austretende Rohgas durch einen Spalt, insbesondere einen Ringspalt zwischen dem vertikal oberen Rand des Strömungsführungselements (7) und der Behälterwand in die Filterkammer (5) geführt ist.

2. Vorrichtung nach einem der vorhergehenden Ansprüche, **dadurch gekennzeichnet, dass** Rohgas mit einem Druck und Volumenstrom in den Behälter (2) führbar ist und aus der/den Austrittsöffnung(en) (1.1) der Leitung (1) oder der/den Austrittsöffnung(en) (1.2.1) des Tauchrohrs (1.2) austritt mit dem eine Wirbelschichtausbildung des inerten Materials (3) erreichbar ist.

3. Vorrichtung nach einem der vorhergehenden Ansprüche, **dadurch gekennzeichnet, dass** mehrere Austrittsöffnungen (1.1) einer Leitung (1) oder mehrere Austrittsöffnungen (1.2.1) eines Tauchrohrs (1.2) über den äußeren Umfang verteilt angeordnet sind und bevorzugt unterschiedliche freie Querschnitte aufweisen.

4. Vorrichtung nach einem der vorhergehenden Ansprüche, **dadurch gekennzeichnet, dass** ein inertes Material (3) ausgewählt ist aus Mineralmehl, insbesondere Quarzsand und Salzen, und eine inerte Flüssigkeit ausgewählt ist aus Wasser, Glycerin und mehrwertigen Alkanolen, insbesondere 1,2-Propandiol.

5. Vorrichtung nach dem vorhergehenden Anspruch, **dadurch gekennzeichnet, dass** ein Bereich der Filterkammer (5) konisch in Richtung Behälter (2) ausgebildet ist und der in Richtung Behälter (2) offene Verbindungsbereich in den Behälter (2) mündet.

6. Vorrichtung nach einem der vorhergehenden Ansprüche, **dadurch gekennzeichnet, dass** der Behälter (2) oder der Teil des Behälters (2), in dem inertes Material (3), inerte Flüssigkeit oder Suspension enthalten ist, lösbar mit der Filterkammer (5) verbunden ist.

7. Vorrichtung nach dem vorhergehenden Anspruch, **dadurch gekennzeichnet, dass** das Wirbelbett mit mindestens 50 Vol.-% der vorhandenen inerten Flüssigkeit und/oder inerten Partikeln gebildet ist.

8. Vorrichtung nach Anspruch 1, **dadurch gekennzeichnet, dass** ein Verhältnis von mindestens 50 Masse-% inerter Partikel in Bezug zu maximal 50 Masse-% an metallischen Partikeln, die im Rohgas enthalten sind, und/oder ein Verhältnis von mindestens 30 Vol.-% inerter Flüssigkeit in Bezug zu maximal 70 Vol.-% an metallischen Partikeln, die im Rohgas enthalten sind, eingehalten ist.

9. Vorrichtung nach Anspruch 1, **dadurch gekennzeichnet, dass** eine dosierte Entnahme eines mit aus dem Rohgas separierten metallischen Partikeln, inerter Flüssigkeit und/oder inerten Partikeln gebildeten Gemisches in vorgebbaren Zeitintervallen oder jeweils nach einer vorgebbaren Anzahl an Abreinigungen des/der Filterelemente(s) (6) erfolgt.

## Claims

1. Device for a separation of exhaust gases containing particles, in which an untreated gas containing particles is conducted by means of a compressor via a tubular line (1) the at least one outlet opening (1.1) thereof into a closed container (2), to which a filter chamber (5) is connected, wherein
an inert material (3) in particle form as a loose fill, an inert liquid or a suspension of an inert material in particle form are contained in the container (2) and the outlet opening(s) (1.1) or at least one outlet opening (1.2.1) of an immersion tube (1.2) into which the outlet opening(s) of the tubular line (1) opens/open out is/are arranged within the inert material, the inert liquid or the suspension, and a fluidized bed is formed with untreated gas in which metallic particles are contained, inert liquid and/or inert particles in the container (2) and untreated gas emerging from the inert material (3), the inert liquid or the suspension is conducted into the filter chamber (5) which is arranged vertically above the container (2) and in which at least one filter element (6) is arranged, and the treated gas emerging through the at least one filter element (6) is removed into the surroundings or is circulated during a treatment, wherein
arranged within the container (2), upstream of the connection between the container (2) and the filter chamber (5) is a flow conducting element (7), with which a direct inflow of untreated gas emerging from the inert material (3), the inert liquid or suspension into the filter chamber (5) is avoidable, **characterized in that**
the vertically upper region of the immersion tube (1.2) is formed as a flow conducting element (7), by a formation of the immersion tube (1.2) widening conically in the direction of the filter chamber (5), and the untreated gas emerging from the inert material (3), the inert liquid or suspension is conducted through a gap, in particular an annular gap, between the vertically upper edge of the flow conducting element (7) and the container wall into the filter chamber (5).

2. Device according to one of the preceding claims, **characterized in that** untreated gas can be conducted with a pressure and volumetric flow into the container (2) and emerges from the outlet opening(s) (1.1) of the line (1) and/or the outlet opening(s) (1.2.1) of the immersion tube (1.2) with which the formation of a fluidized bed of the inert material (3) can be achieved.

3. Device according to one of the preceding claims, **characterized in that** a number of outlet openings (1.1) of a line (1) or a number of outlet openings (1.2.1) of an immersion tube (1.2) are arranged distributed over the outer circumference and preferably have different free cross sections.

4. Device according to one of the preceding claims, **characterized in that** an inert material (3) is selected from mineral flour, in particular quartz sand and salts, and an inert liquid selected from water, glycerin and polyhydric alkanols, in particular 1,2-propanediol.

5. Device according to the preceding claim, **characterized in that** a region of the filter chamber (5) is formed conically in the direction of the container (2) and the connecting region that is open in the direction of the container (2) opens out into the container (2).

6. Device according to one of the preceding claims, **characterized in that** the container (2) or the part of the container (2) in which inert material (3), inert liquid or suspension is contained, is detachably connected to the filter chamber (5).

7. Device according to one of the preceding claims, **characterized in that** the fluidized bed is formed with at least 50% by volume of the inert liquid and/or inert particles present.

8. Device according to Claim 1, **characterized in that** a ratio of at least 50% by mass of inert particles with respect to a maximum of 50% by mass of metallic particles that are contained in the untreated gas and/or a ratio of at least 30% by volume of inert liquid with respect to a maximum of 70% by volume of metallic particles that are contained in the untreated gas is maintained.

9. Device according to Claim 1, **characterized in that** a metered removal of a mixture formed from the untreated gas of separated metallic particles, inert liquid and/or inert particles takes place at predeterminable time intervals or in each case after the filter element(s) (6) has/have been cleaned a predeterminable number of times.

## Revendications

1. Dispositif pour une séparation de gaz d'échappement contenant des particules, dans lequel un gaz brut contenant des particules est conduit, au moyen d'un compresseur, par l'intermédiaire d'une conduite tubulaire (1) ayant au moins une ouverture de sortie (1.1), dans un récipient fermé (2) auquel est raccordé une chambre de filtration (5), dans lequel
dans le récipient (2) est contenu un matériau inerte (3) sous la forme de particules en vrac, un liquide inerte ou une suspension d'un matériau inerte sous forme de particules et l'ouverture / les ouvertures de sortie (1.1) ou au moins une ouverture de sortie (1.2.1) d'un tube plongeant (1.2) dans laquelle débouche(nt) dans l'ouverture / les ouvertures de sortie de la conduite tubulaire (1), est/sont disposée(s) à l'intérieur du matériau inerte, du liquide inerte ou de la suspension et, avec le gaz brut dans lequel sont contenues des particules métalliques, un liquide inerte et/ou des particules inertes, un lit fluidisé est formé dans le récipient (2) et le gaz brut sortant du matériau inerte (3), du liquide inerte ou de la suspension est conduit vers la chambre de filtration (5), disposée verticalement au-dessus du récipient (2), dans laquelle est disposé au moins un élément de filtration (6), et le gaz purifié sortant à travers l'au moins un élément de filtration (6) est évacué dans l'environnement ou est conduit vers un traitement de recirculation, dans lequel
à l'intérieur du récipient (2), dans la direction d'écoulement, avant la liaison entre le récipient (2) et la chambre de filtration (5), est disposé un élément de guidage d'écoulement (7) avec lequel un écoulement direct du gaz brut sortant du matériau inerte (3), du liquide inerte ou de la suspension vers la chambre de filtration (5) peut être évité,
**caractérisé en ce que**
la partie verticalement supérieure du tube plongeant (1.2) en tant qu'élément de guidage d'écoulement (7) est constituée par une formation du tube plongeant (1.2) s'élargissant de manière conique en direction de la chambre de filtration (5) et le gaz brut sortant du matériau inerte (3), du liquide inerte ou de la suspension est conduit à travers un interstice, plus particulièrement un interstice annulaire entre le bord verticalement supérieur de l'élément de guidage d'écoulement (7) et la paroi du récipient, vers la chambre de filtration (5).

2. Dispositif selon l'une des revendications précédentes, **caractérisé en ce que** le gaz brut peut être conduit vers le récipient (2) et sort de l'ouverture / des ouvertures de sortie (1.1) de la conduite (1) ou de l'ouverture / des ouvertures de sortie (1.2.1) du tube plongeant (1.2) avec une pression et un débit volumique avec lesquels la formation d'une couche fluidisée du matériau inerte (3) peut être obtenue.

3. Dispositif selon l'une des revendications précédentes, **caractérisé en ce que** plusieurs ouvertures de sortie (1.1) d'une conduite (1) ou plusieurs ouvertures de sortie (1.2.1) d'un tube plongeant (1.2) sont disposées de manière répartie sur la circonférence externe et présentent de préférence des sections libres différentes.

4. Dispositif selon l'une des revendications précédentes, **caractérisé en ce qu'**un matériau inerte (3) est sélectionné parmi des farines minérales, plus particulièrement de sable de quartz et de sels, et un liquide inerte est sélectionné parmi de l'eau, de la glycérine et des alcanols multivalents, plus particulièrement du 1,2 - propanediol.

5. Dispositif selon la revendication précédente, **caractérisé en ce qu'**une partie de la chambre de filtration (5) est formée de manière conique en direction du récipient (2) et la partie de liaison ouverte en direction du récipient (2) débouche dans le récipient (2).

6. Dispositif selon l'une des revendications précédentes, **caractérisé en ce que** le récipient (2) ou la partie du récipient (2) dans laquelle un matériau inerte (3), un liquide inerte ou une suspension est contenu, est relié de manière amovible avec la chambre de filtration (5).

7. Dispositif selon la revendication précédente, **caractérisé en ce que** le lit fluidisé est constitué d'au moins 50 % en volume du liquide inerte existant et/ou des particules inertes existantes.

8. Dispositif selon la revendication 1, **caractérisé en ce qu'**un rapport d'au moins 50 % en masse de particules inertes par rapport à au maximum 50 % en masse de particules métalliques contenues dans le gaz brut et/ou un rapport d'au moins 30 % en volume de liquide inerte par rapport à au maximum 70 % de particules métalliques contenues dans le gaz brut, est respecté.

9. Dispositif selon la revendication 1, **caractérisé en ce qu'**un prélèvement dosé d'un mélange constitué des particules métalliques séparées du gaz brut, du liquide inerte et/ou de particules inertes a lieu à des intervalles prédéterminés ou après un nombre prédéterminé de nettoyages du/des élément(s) de filtration (6).
